# EUROPÄISCHE PATENTANMELDUNG

(11) **EP 1 736 689 A2**
(43) Veröffentlichungstag der Anmeldung: **27.12.2006**
(21) Anmeldenummer: 06012964.0
(22) Anmeldetag: 23.06.2006
(51) Int. Cl.: F16H 7/12

(54) **Riemenspannvorrichtung zur Befestigung an einem Aggregat**

(30) Priorität: 24.06.2005 DE 102005029753
(71) Anmelder: Muhr und Bender KG, 57439 Attendorn (DE)
(72) Erfinder: Kobelev, Vladimir, Dr.rer.nat., 57439 Attendorn (DE); Jung, Manfred, 56457 Westerburg (DE); Berger, Rudolf, 52152 Simmerath (DE)
(74) Vertreter: Neumann, Ernst Dieter

(57) **Zusammenfassung**

Riemenspannvorrichtung zur Befestigung an einem Aggregat, mit einer Torsionsfederanordnung 14, einem Gehäuse 12 mit einer Längsachse A, einer Torsionsfeder 14, die koaxial zur Längsachse A im Gehäuse 12 liegt und mit einem ihrer Enden drehfest in dem Gehäuse 12 festgelegt ist, einem Spannarm 15, der gegenüber dem Gehäuse 12 um die Längsachse A schwingend drehbar gelagert ist und mit dem anderen Ende der Torsionsfeder 14 drehfest verbunden ist, und einer Spannrolle 16, die an einem freien Ende des Spannarms 15 um eine zur Längsachse A parallele Drehachse B drehbar gelagert ist, wobei am Gehäuse 12 ein Flansch 13 zur Befestigung am Aggregat 51 angeordnet ist, dessen Flanschebene von der Längsachse A durchsetzt wird.

## Beschreibung

Die Erfindung betrifft eine Riemenspannvorrichtung zur Befestigung an einem Aggregat mit einer Torsionsfederanordnung mit einem Gehäuse mit einer Längsachse, einer Torsionsfeder, die koaxial zur Längsachse in dem Gehäuse liegt und mit einem ihrer Enden drehfest in dem Gehäuse festgelegt ist, einem Spannarm, der gegenüber dem Gehäuse um die Längsachse schwingend drehbar gelagert ist und mit dem anderen Ende der Torsionsfeder drehfest verbunden ist, und einer Spannrolle, die an einem freien Ende des Spannarms um eine zur Längsachse parallele Drehachse drehbar gelagert ist. Derartige Riemenspannvorrichtungen werden zusammen mit Riementrieben verwendet, die zumindest zwei Riemenscheiben und einen über diese laufenden endlosen Riemen umfassen, wobei eine der Riemenscheiben eine Antriebsscheibe ist und die Spannrolle der Riemenspannvorrichtung auf den Leertrum des endlosen Riemens einwirkt, damit Längenänderungen des Riemens ausgeglichen werden und der Riemen nicht von den Riemenscheiben springt. Als Riemen können die heute weitgehend üblichen Zahnriemen oder Keilriemen Verwendung finden. Bei Ersatz der Riemenscheiben und der Spannrolle durch Kettenräder kann die Vorrichtung sinngemäß auch bei Kettentrieben Anwendung finden.

Ein typischer Anwendungsfall von Riementrieben liegt im Antrieb der Nebenaggregate eines Verbrennungsmotors, wobei eine erste Riemenscheibe auf der Kurbelwelle sitzt und als Antriebsscheibe dient und weitere Riemenscheiben auf den Wellen von Nebenaggregaten wie Wasserpumpe, Lichtmaschine, Klimaanlage, Kompressor usw. sitzen und vom Riementrieb angetrieben werden. Hierbei entsteht in Umlaufrichtung hinter der antreibenden Riemenscheibe ein Lostrum, dessen Lose von der Spannrolle ausgeglichen werden muß, damit der Riemen nicht von den Riemenscheiben abspringt. Im Laufe der Betriebsdauer und unter Temperatureinfluß verändert sich die Riemenlänge, so daß der Spannarm mit der Spannrolle unter Federvorspannung auf den Lostrum einwirken muß. Damit sich die Bewegungen des Spannarms und des Riemens nicht einschwingen, ist eine Dämpfungsvorrichtung für diese Bewegungen des Spannarms vorgesehen. Die Dreh- bzw. Pendelachse des Spannarmes liegt hierbei parallel zu den Drehachsen der Riemenscheiben und der Spannrolle.

Aus der EP 1 420 193 A2 ist eine Spannvorrichtung der genannten Art bekannt, bei der an einem Gehäuserohr mit axialem Abstand voneinander zwei Augen angesetzt sind, mit denen das Gehäuse an einer parallel zur Längsachse des Gehäuses verlaufenden Fläche eines Aggregats angeschraubt werden kann. Dies erfordert freien Bauraum an einer Längsseite des Aggregats, insbesondere des Verbrennungsmotors, an dessen Stirnseite der zugeordnete Riementrieb von den Riemenscheiben und der Spannrolle aufgespannt ist.

Aus der DE 29 12 944 A1 ist eine Riemenspannvorrichtung der genannten Art bekannt, bei der eine radial zur Längsachse des Gehäuses angeordnete Haltelasche für die Torsionsfeder an dem dem Spannarm axial entgegengesetzten Ende des Gehäuserohres angeordnet ist. Das Gehäuse der Riemenspannvorrichtung wird hierbei Biegebelastungen ausgesetzt.

Hiervon ausgehend ist es Aufgabe der vorliegenden Erfindung, eine Riemenspannvorrichtung der eingangs genannten Art bereitzustellen, die bei großer Stabilität günstige Befestigungsmöglichkeiten bietet. Die Lösung besteht in einer Riemenspannvorrichtung, die sich dadurch auszeichnet, daß am Gehäuse ein Flansch zur Befestigung am Aggregat angeordnet ist, dessen Flanschebene von der Längsachse A durchsetzt wird. Hierbei ist insbesondere vorgesehen, daß die Flanschebene normal zur Längsachse A liegt, wobei der Flansch insbesondere als Ringflansch ausgebildet sein kann, der radial an das rohrförmige Gehäuse angeschweißt werden kann. Hiermit ist eine einfache Verbindungsmöglichkeit bei hoher Stabilität gegeben. Durch die Ausgestaltung der Befestigungsmittel für die Riemenspannvorrichtung am Aggregat als von der Längsachse durchsetzter Flansch ist eine Anordnung der Riemenspannvorrichtung von der Stirnfläche des Aggregats aus möglich, an der der Riementrieb aufgespannt ist. Hierbei erfordert die Befestigung nur eine kleine Grundfläche von der Größe des Flansches. Der Flansch kann insbesondere axial unmittelbar im Anschluß an ein Lagerauge des Spannarmes angeordnet sein, so daß eine Abstützung des Gehäuses nahe der Belastungsebene des Spannarmes erfolgt. Hiermit wird das Gehäuse von Biegekräften im wesentlichen freigehalten.

Nach einer ersten Ausgestaltungsform kann der Flansch mit beispielsweise zwei oder drei Durchgangslöchern versehen sein, durch die Schrauben durchgesteckt werden, die in eine Flanschfläche des Aggregats eingeschraubt werden, an die sich der Gehäuseflansch abstützt. In vereinfachter Ausführung kann in den Flansch auch ein Stift eingesetzt sein, der zur Verdrehsicherung des Flansches gegenüber dem Aggregat in eine erste Flanschbohrung im Aggregat eingreift, so daß nur ein einziges Durchgangsloch im Flansch zum Einstecken einer Schraube erforderlich wird, die in eine Flanschfläche des Aggregats eingedreht wird. Hiermit kann die ganze Riemenspannvorrichtung durch Eindrehen einer einzigen Schraube mit dem Aggregat stabil verbunden werden.

Nach einer zweiten Ausgestaltungsform kann axial entgegengesetzt zum Flansch am Gehäuse eine axiale Spannbuchse zur Verspannung des Flansches am Aggregat vorgesehen sein. In diesem Fall ist der Gehäuseflansch als reiner Stützflansch zur Anlage an einer Flanschfläche des Aggregats ausgelegt, der in Kombination mit einer Spannhülse verwendet wird, die auf das dem Spannarm axial entgegengesetzte Ende des Gehäuses aufgeschraubt wird und sich in Gegenrichtung am Aggregat abstützt. Hierbei wird also die Riemenspannvorrichtung mit dem Gehäuse durch einen Abschnitt des Aggregats oder eines entsprechenden Anbauteiles durchgesteckt und in Richtung der Längsachse A des Gehäuses verspannt. Auch hierbei geht die Anordnung der Riemenspannvorrichtung von der Stirnseite des Aggregats aus, die den zugeordneten Riementrieb trägt. Auch in der vorgenannten Ausführung kann eine stabile Befestigung durch Andrehen einer einzigen Schraube hergestellt werden, wenn zusätzliche Verdrehsicherungsmittel für den Flansch, z.B. in Form eines Stiftes, vorgesehen sind.

Eine erste bevorzugte Ausgestaltung für die Reibungsdämpfungsvorrichtung geht dahin, daß die Reibungsdämpfungsvorrichtung auf dem Gehäuse angeordnet ist und diesem gegenüber Reibung erzeugt, wobei sie im Drehsinn im Lagerauge des Spannarms abgestützt ist. Eine zweite günstige Ausgestaltung der Reibungsdämpfungsvorrichtung geht dahin, daß diese außen auf dem Lagerauge des Spannarms angeordnet ist und sich im Drehsinn am Aggregat abstützt.

Wie sich aus dem vorstehenden schon ergibt, erstreckt sich die Erfindung weiterhin auf ein Aggregat mit einer Riemenspannvorrichtung der genannten Art, die dadurch gekennzeichnet ist, daß das Aggregat eine Gehäuseausnehmung mit umgebender Flanschfläche aufweist, in die das Gehäuse der Riemenspannvorrichtung eingesetzt ist, wobei der Gehäuseflansch an der Flanschfläche des Aggregats befestigt ist, insbesondere an der Flanschfläche des Aggregats angeschraubt ist. Weiterhin erstreckt sich die Erfindung auf ein Aggregat mit einer Riemenspannvorrichtung der genannten Art, das dadurch gekennzeichnet ist, daß das Aggregat eine Gehäuseausnehmung mit umgebender Flanschfläche aufweist, in die das Gehäuse der Riemenspannvorrichtung eingesetzt ist, wobei sich der Gehäuseflansch an der Flanschfläche des Aggregats abstützt und das Gehäuse mit Spannmitteln gegen das Aggregat axial verspannt ist. Hierbei umfassen die Spannmittel insbesondere eine auf das dem Spannarm bzw. Flansch axial entgegengesetzte Ende des Gehäuses aufgesetzte axiale Spannhülse, die sich entgegen dem Gehäuseflansch am Aggregat axial abstützt.

Bevorzugte Ausführungsformen finden sich in weiteren Unteransprüchen, auf die hiermit Bezug genommen wird.

Die Torsionsfeder ist in allen genannten Ausführungen bevorzugt als Bündel aus Federstäben ausgebildet, das mit seinen Enden formschlüssig in Buchsen eingesetzt ist, die ihrerseits mit dem Gehäuse einerseits und dem Spannarm andererseits unmittelbar oder mittelbar verbunden sind.

Bevorzugte Ausführungsbeispiele der Erfindung sind in den Figuren dargestellt und werden nachstehend beschrieben.
- Figur 1: zeigt eine erfindungsgemäße Riemenspannvorrichtung in einer ersten Ausführungsform im Längsschnitt;
- Figur 2: zeigt eine Vorrichtung nach Figur 1 im Querschnitt A-A;
- Figur 3: zeigt eine Vorrichtung nach Figur 1 im Querschnitt B-B;
- Figur 4: zeigt eine erfindungsgemäße Riemenspannvorrichtung in einer zweiten Ausführung im Längsschnitt;
- Figur 5: zeigt eine Vorrichtung nach Figur 4 im Querschnitt A-A;
- Figur 6: zeigt eine Vorrichtung nach Figur 4 im Querschnitt B-B;
- Figur 7: zeigt eine erfindungsgemäße Riemenspannvorrichtung in einer dritten Ausführungsform im Längsschnitt;
- Figur 8: zeigt eine Vorrichtung nach Figur 7 im Querschnitt A-A;
- Figur 9: zeigt eine Vorrichtung nach Figur 8 mit Abstützung.

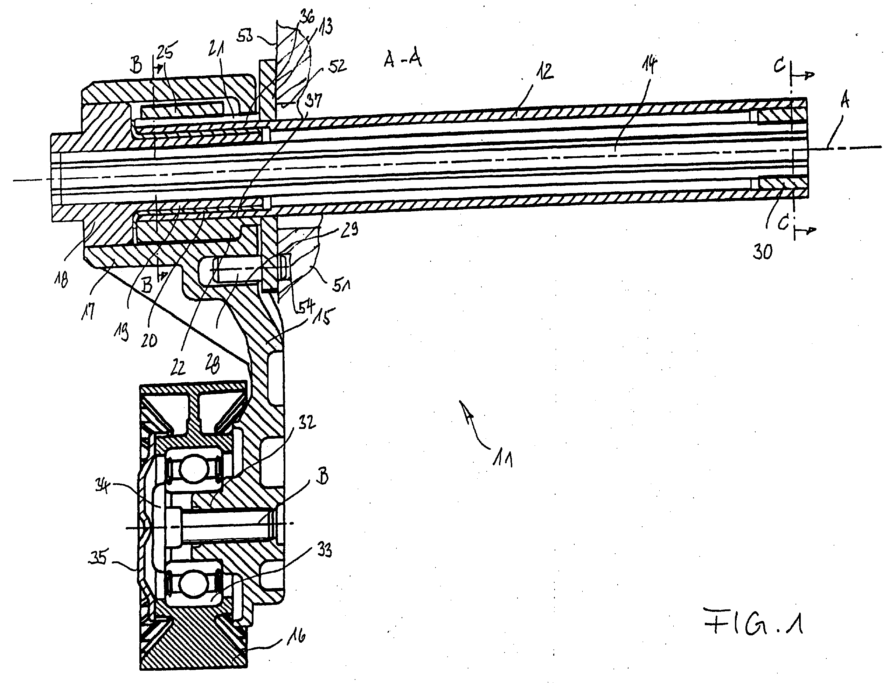

Die Figuren 1 bis 3 werden nachstehend gemeinsam beschrieben. Eine erfindungsgemäße Riemenspannvorrichtung 11 umfaßt ein rohrförmiges Gehäuse 12 mit einer Längsachse A, an das ein Befestigungsflansch 13 außen angesetzt ist und in dem eine Torsionsfeder 14 einliegt, einen um die Längsachse A schwingenden Span narm 15 sowie eine am freien Ende des Spannarmes um eine parallel zur Längsachse A liegende Drehachse B drehbare Spannrolle 16. Der Spannarm 15 umfaßt ein Lagerauge 17, in das ein Stopfen 18 eingesetzt ist. Der Stopfen 18 hat einen Hülsenansatz 19, der in das Gehäuse 12 eingreift und über eine Gleitlagerbuchse 20 in diesem drehbar gelagert ist. Die Torsionsfeder 14 ist über einen fest in das Gehäuse eingesetzten Stopfen 30 an einem Ende des Gehäuses 12 drehfest mit diesem verbunden, während das andere Ende der Torsionsfeder 14 drehfest mit dem Stopfen 18 und damit mit dem Spannarm 15 verbunden ist. Auf dem Gehäuse 12 sitzt innerhalb des Lagerauges 17 eine am Umfang geschlitzte Dämpfungshülse 21, die mit einer Außenrippe 22 drehfest zwischen zwei Rippenhaltern 23, 24 im Lagerauge 17 gehalten ist. Die Reibungshülse 21 wird von einer ebenfalls am Umfang geschlitzten Federhülse 25 umgeben, die gegenüber der Reibungshülse 21 radial vorgespannt ist und somit die geschlitzte Reibungshülse mit nach innen gerichteter radialer Vorspannung auf dem zylindrischen Gehäuse 12 festhält. Die Federhülse 25 ist gegenüber der Reibungshülse 21 in Umfangsrichtung formschlüssig festgelegt, insbesondere durch einen Radialnoppen 26, der in ein entsprechendes Loch 27 in der Federhülse 25 eingreift. Am Befestigungsflansch 13 ist ein Anschlagstift 28 erkennbar, der in ein umfangsgerichtetes Langloch 29 im Spannarm 15 eingreift und somit die relative Schwenkbewegung des Spannarmes 15 gegenüber dem Befestigungsflansch 13 und damit gegenüber dem Gehäuse 12 begrenzt. Im Befestigungsflansch 13 ist weiterhin eines von mehreren Befestigungslöchern 31 zum Anschrauben des Befestigungsflansches 13 mittels Schrauben an einem Aggregat gezeigt. Am äußeren Ende des Spannarmes 15 ist weiterhin ein Zapfenansatz 32 erkennbar, auf dem die Spannrolle 16 mittels eines Rillenkugellagers 33 gelagert ist, wobei das Rillenkugellager mittels einer Schraube 34 auf dem Zapfenansatz 32 festgesetzt ist. Zur Abdichtung des Rillenkugellagers 33 ist ein Deckel 35 in die Spannrolle 16 eingesetzt. In eine Bohrung 44 im Spannarm 15 ist ein Sicherungsstift 45 eingesetzt, der eine deckungsgleiche Bohrung im Befestigungsflansch 13 durchsetzt und den Spannarm 15 zur Montage in einer stark vorgespannten Stellung gegenüber dem Befestigungsflansch hält.

Wie in Figur 1 im einzelnen zu erkennen ist, wird das Gehäuse 12 in eine Gehäuseöffnung 52 im Aggregat 51 eingesteckt, das nur teilweise dargestellt ist. Der Flansch 13 legt sich dabei gegen eine Flanschfläche 53 im Aggregat 51 an, die zur Stirnseite des Aggregats 51 weist, an der der gesamte Riementrieb aufgespannt ist. In eine Ansenkung 54 in der Flanschfläche 53 greift der Stift 28, der den Flansch 13 durchdringt, zur Verdrehsicherung des Flansches ein. Die Verspannung des Flansches 13 mit dem Aggregat 51 erfolgt durch eine in dieser Schnittebene nicht erkennbare Schraube, die durch die Durchgangsöffnung 31 durchgesteckt ist und in ein Gewindeloch in der Flanschfläche 53 eingeschraubt ist.

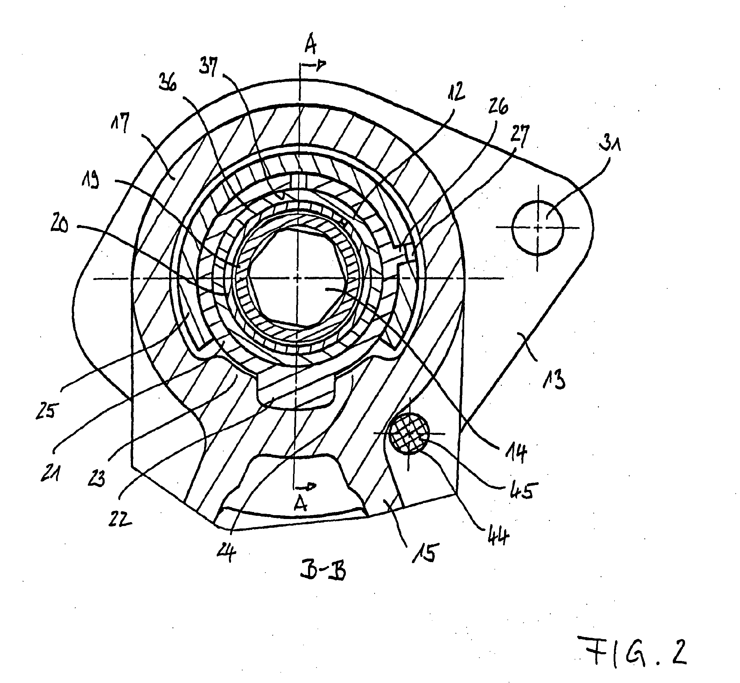

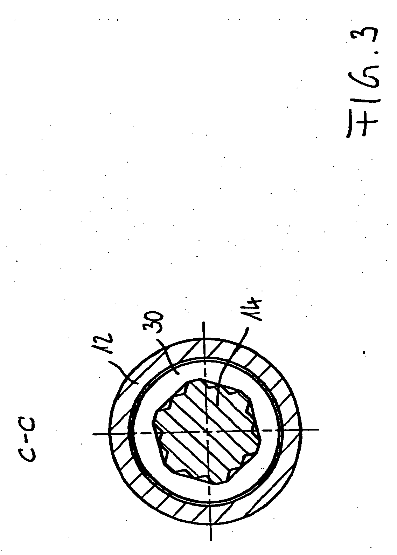

Aus der vorstehend beschriebenen Konstruktion ergibt sich die folgende Funktion der Riemenspannvorrichtung. Gegenüber dem mit dem Flansch 13 festlegbaren Gehäuse 12 ist der Spannarm 15 mit der Buchse 19 um die Längsachse A verschwenkbar. Bei einer Schwenkbewegung wird die Torsionsfeder 14, die zum einen in dem Stopfen 30 und damit im Gehäuse 12 festgelegt ist, zum anderen in der Buchse 19 und damit dem Spannarm 15 festgelegt ist, gegen elastische Rückstellkräfte verdreht. In der Einbaulage ist es hierbei möglich, daß die Torsionsfeder 14 in einer bereits stark vorgespannten verdrehten Stellung gehalten ist. Jede Schwenkbewegung des Spannarmes 15 gegenüber dem Gehäuse 12 erzeugt eine Reibung der Reibungshülse 21, die durch die Bandfeder 25 radial nach innen vorgespannt ist, gegenüber dem Gehäuse 12 in der Reibflächenpaarung 36, 37, so daß die Schwingbewegung des Spannarmes gedämpft wird. Wie in den Figuren 2 und 3 erkennbar ist, haben die Stopfen 18, 30 jeweils eine polygone Innenkontur, in der die Torsionsfeder 14 formschlüssig aufgenommen ist. Die Torsionsfeder 14 kann hierbei aus einem Bündel von einzelnen parallelen Federstäben zusammengesetzt sein, die hier nicht bezeichnet sind.

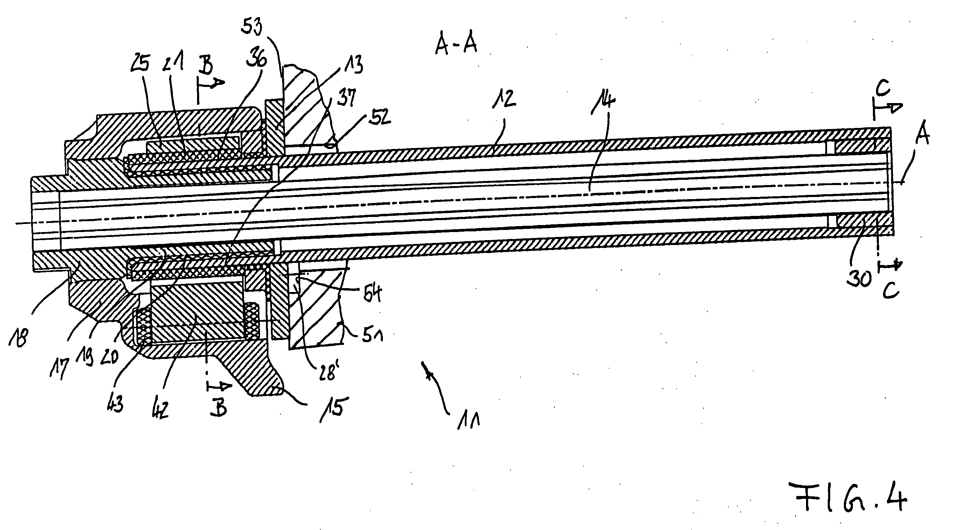

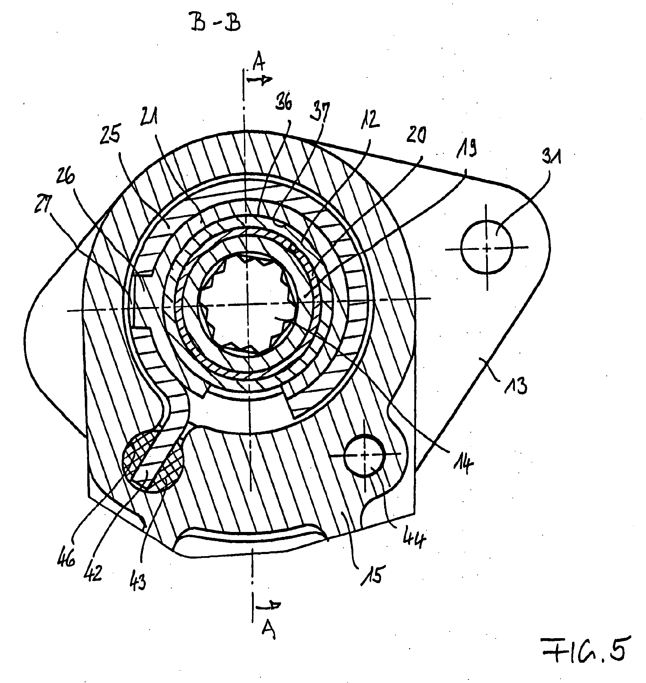

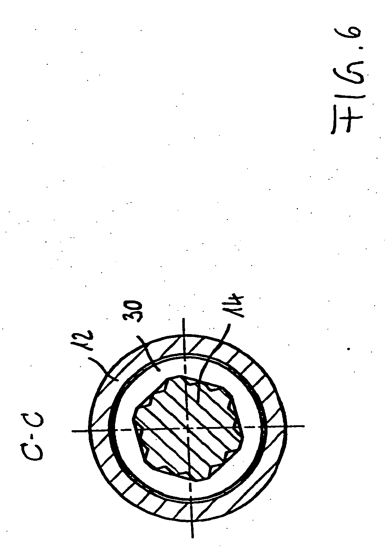

Die Figuren 4 bis 6 werden nachstehend gemeinsam beschrieben. Eine erfindungsgemäße Riemenspannvorrichtung 11 umfaßt im wesentlichen ein rohrförmiges Gehäuse 12 mit einer Längsachse A, an das ein Befestigungsflansch 13' außen angesetzt ist, und in dem eine Torsionsfeder 14 einliegt, einen um die Längsachse A schwingenden Spannarm 15 sowie eine am freien Ende des Spannarmes um eine parallel zur Längsachse A liegende Drehachse drehbare Spannrolle. In den Figuren 4 und 5 ist der Spannarm 15 abgebrochen dargestellt. Er kann analog zu dem in Figur 1 gezeigten Spannarm ausgebildet sein. Der Spannarm 15 umfaßt ein Lagerauge 17, in das ein Stopfen 18 eingesetzt ist. Das Lagerauge 17' ist über eine Gleitlagerbuchse 20' unmittelbar auf dem Gehäuse 12 drehbar gelagert. Der Stopfen 18 hat einen Hülsenansatz 19, der in das Gehäuse 12 eingreift und über eine Gleitlagerbuchse 20 in diesem drehbar gelagert ist. Die Torsionsfeder 14 ist über einen fest in das Gehäuse 12 eingesetzten Stopfen 30 an einem Ende des Gehäuses 12 drehfest mit diesem verbunden, während das andere Ende der Torsionsfeder drehfest mit dem Stopfen 18 und damit mit dem Spannarm 15 verbunden ist. Auf dem Gehäuse 12 sitzt innerhalb des Lagerauges 17 eine am Umfang geschlitzte Dämpfungshülse 21. Die Reibungshülse 21 wird von einer ebenfalls am Umfang geschlitzten Federhülse 25 umgeben, die gegenüber der Reibungshülse 21 radial vorgespannt ist und somit die geschlitzte Reibungshülse mit radialer nach innen gerichteter Vorspannung auf dem zylindrischen Gehäuse 12 festhält. Die Federhülse 25 ist gegenüber dem Spannarm 15 mittels einer radial nach außen gebogenen Lasche 42 in Umfangsrichtung formschlüssig festgelegt, die in eine Tasche 46 im Spannarm 15 eingreift, wobei ein gummielastisches Dämpfungselement 43 zwischen beiden eingesetzt ist. Die Dämpfungshülse 21 ist drehfest in der Federhülse 25 gehalten, insbesondere durch einen Radialnoppen 26, der in ein entsprechendes Loch 27 in der Federhülse 25 eingreift. Im Befestigungsflansch 13 ist eines von mehreren Befestigungslöchern 31 zum Anschrauben des Befestigungsflansches 13 mittels Schrauben an einem Aggregat gezeigt. Im Befestigungsflansch ist weiterhin eine Bohrung 44 zur Aufnahme eines Sicherungsstiftes für die Montage gezeigt, dessen Funktion bereits beim ersten Ausführungsbeispiel beschrieben wurde.

Wie in Figur 4 zu erkennen ist, ist das Gehäuse 12 in eine Gehäuseöffnung 52 eines Aggregats 51 eingesteckt, das nur teilweise dargestellt ist. Hierbei legt sich der Flansch 13 an einer Flanschfläche 53 des Aggregats 51 an, das die Gehäuseöffnung 52 umgibt. Ein in den Flansch 13 eingesetzter Stift 28' greift zur Verdrehsicherung in eine Ansenkung 54' in der Flanschfläche 53 des Aggregats 51 ein. Mittels einer im Schnitt nicht dargestellten Schraube, die durch das Schraubenloch 31 im Flansch 13 durchgesteckt ist, ist die Riemenspannvorrichtung mit dem Aggregat 51 verspannt.

Aus der vorstehend beschriebenen Konstruktion ergibt sich die folgende Funktion der Riemenspannvorrichtung. Gegenüber dem mit dem Flansch 13 festlegbaren Gehäuse 12 ist der Spannarm 15 mit der Buchse 19 um die Längsachse A verschwenkbar. Bei einer Schwenkbewegung wird die Torsionsfeder 14, die zum einen in dem Stopfen 30 und damit im Gehäuse 12 festgelegt ist, zum anderen in der Buchse 19 und damit dem Spannarm 15 festgelegt ist, gegen elastische Rückstellkräfte verdreht. In der Einbaulage ist es hierbei möglich, daß die Torsionsfeder 14 in einer bereits stark vorgespannten verdrehten Stellung gehalten ist. Jede Schwenkbewegung des Spannarmes 15 gegenüber dem Gehäuse 12 erzeugt eine Reibung der Reibungshülse 21, die durch die Bandfeder 25 radial vorgespannt ist, gegenüber dem Gehäuse 12 in der Reibflächenpaarung 36, 37, so daß die Schwingbewegung des Spannarmes gedämpft wird.

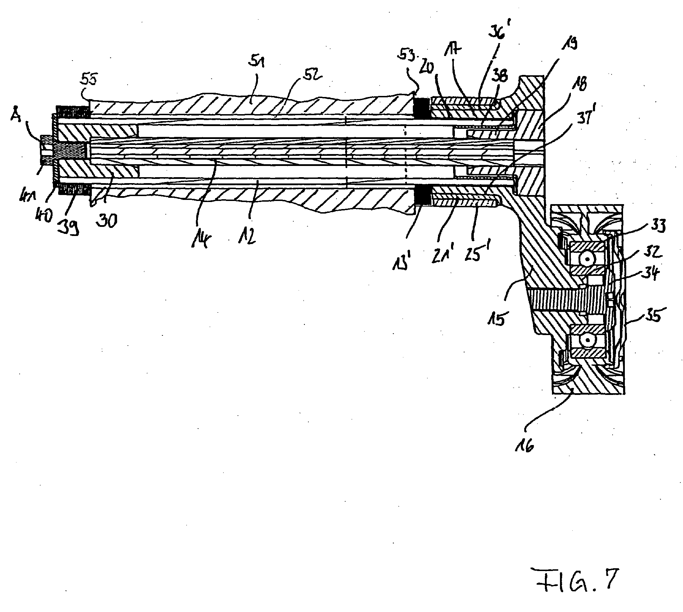

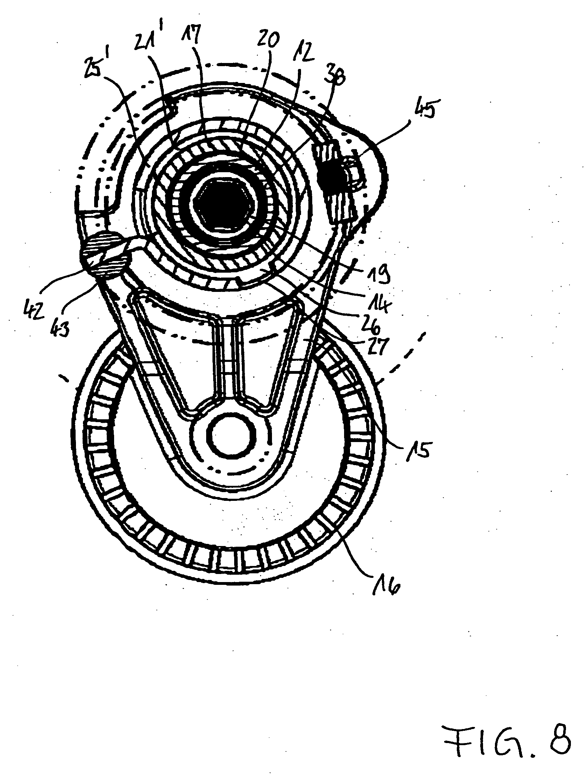

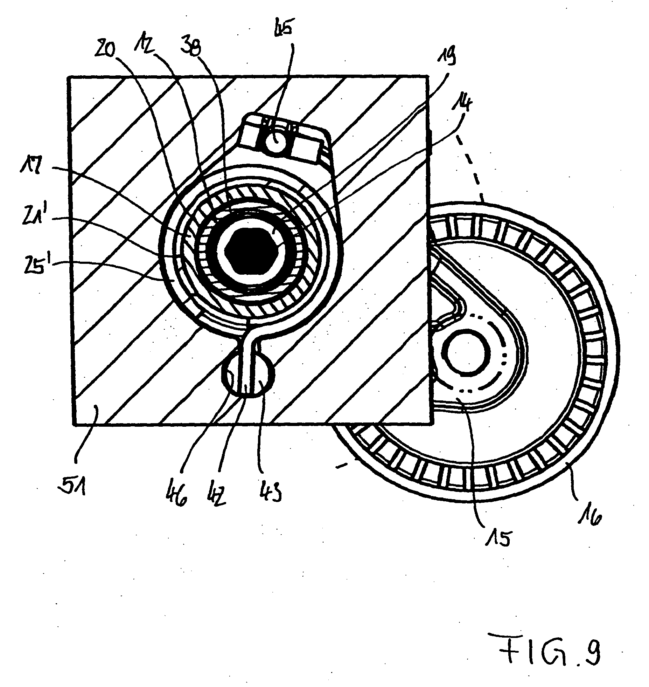

Die Figuren 7 bis 9 werden nachstehend gemeinsam beschrieben. Eine erfindungsgemäße Riemenspannvorrichtung 11 umfaßt im wesentlichen ein rohrförmiges Gehäuse 12 mit einer Längsachse A, an das ein Befestigungsflansch 13' außen angesetzt ist, und in dem eine Torsionsfeder 14 einliegt, einen um die Längsachse A schwingenden Spannarm 15 sowie eine am freien Ende des Spannarmes um eine parallel zur Längsachse A liegende Drehachse B drehbare Spannrolle 16. Der Spannarm 15 umfaßt ein Lagerauge 17', in das ein Stopfen 18 eingesetzt ist. Das Lagerauge 17' ist über eine Gleitlagerbuchse 20' unmittelbar auf dem Gehäuse 12 drehbar gelagert. Der Stopfen 18 hat einen Hülsenansatz 19, der in das Gehäuse 12 eingreift und über eine Dichtungshülse 38 gegenüber diesem abgedichtet ist. Die Torsionsfeder 14 ist über einen fest in das Gehäuse 12 eingesetzten Stopfen 30 an einem Ende des Gehäuses 12 drehfest mit diesem verbunden, während das andere Ende der Torsionsfeder drehfest mit dem Hülsenansatz 19 des Stopfens 18 und damit mit dem Spannarm 15 verbunden ist. Auf dem Lagerauge 17' sitzt eine am Umfang geschlitzte Dämpfungshülse 21. Die Reibungshülse 21 wird von einer ebenfalls am Umfang geschlitzten Federhülse 25' umgeben, die gegenüber der Reibungshülse 21' radial vorgespannt ist und somit die geschlitzte Reibungshülse mit radialer Vorspannung auf dem Lagerauge 17' festhält. Die Federhülse 25' ist gegenüber der Reibungshülse 21' in Umfangsrichtung formschlüssig festgelegt, insbesondere durch einen Radialnoppen 26, der in ein entsprechendes Loch 27 in der Bandfeder 25' eingreift. Der Befestigungsflansch 13' ist ein Stützflansch und weist ausschließlich Verdrehsicherungsmittel gegenüber einer Stützfläche eines Aggregats oder einer Befestigungsanordnung auf. Am freien Ende des Gehäuses sitzt eine Axialspannhülse 39 auf, die mittels einer Scheibe 40 und einer in die Hülse 21 eingedrehten Schraube 41 so gespannt werden kann, daß das Gehäuse 12 in einem Aggregat oder einer Befestigungsanordnung, in welche es eingeschoben ist, verspannt werden kann. Eine Lasche 42 an der Federhülse 25', die radial abgebogen ist, ist in einer Tasche 46 des Befestigungsgehäuses festzulegen, wobei ein gummielastisches Dämpfungselement 43 zwischen beiden eingesetzt ist. Am äußeren Ende des Spannarmes 15 ist weiterhin ein Zapfenansatz 32 erkennbar, auf dem die Spannrolle 16 mittels eines Rillenkugellagers 33 gelagert ist, wobei das Lager mittels einer Schraube 34 auf dem Zapfenansatz 32 festgesetzt ist. Zur Abdichtung des Rillenkugellagers 33 ist ein Deckel 35 in die Spannrolle 16 eingesetzt.

Wie in Figur 7 zu erkennen ist, ist das Gehäuserohr 12 durch eine Gehäusebohrung 52 des weggebrochen dargestellten Aggregats 51 durchgesteckt, wobei sich der Flansch 13' an einer Flanschfläche 53 und die Spannschraube 39 an einer entgegengesetzt gerichteten Flanschfläche 55 abstützen, so daß die Riemenspannvorrichtung im Aggregat 51 verspannt ist, wobei die Montage von der Stirnseite des Aggregats 51 aus erfolgt, über die sich der Riementrieb erstreckt und die durch die Lage der Flanschfläche 53 definiert ist.

Aus der vorstehend beschriebenen Konstruktion ergibt sich die folgende Funktion der Riemenspannvorrichtung. Gegenüber dem mit dem Flansch 13 und der Hülse 39 festlegbaren Gehäuse 12 ist der Spannarm 15 mit der Buchse 19 um die Längsachse A verschwenkbar. Bei einer Schwenkbewegung wird die Torsionsfeder 14, die zum einen in dem Stopfen 30 und damit im Gehäuse 12 festgelegt ist, zum anderen in dem Stopfen 18 und damit dem Spannarm 15 festgelegt ist, gegen elastische Rückstellkräfte verdreht. In der Einbaulage ist es hierbei möglich, daß die Torsionsfeder 14 in einer bereits stark vorgespannten verdrehten Stellung gehalten ist. Jede Schwenkbewegung des Spannarmes 15 gegenüber dem Gehäuse 12 erzeugt eine Reibung der feststehenden Reibungshülse 21, die durch die Bandfeder 25 radial vorgespannt ist, gegenüber dem Lagerauge 17', das mit dem Spannarm 15 mitbewegt wird, so daß die Schwingbewegung des Spannarmes gedämpft wird.

### Bezugszeichenliste

- 11: Riemenspannvorrichtung
- 12: Gehäuse (rohrförmig)
- 13: Befestigungsflansch
- 14: Torsionsfeder
- 15: Spannarm
- 16: Spannrolle
- 17: Lagerauge
- 18: Stopfen
- 19: Hülse
- 20: Gleitlagerbuchse
- 21: Reibungshülse
- 22: Rippe
- 23: Rippenanschlag
- 24: Rippenanschlag
- 25: Federhülse
- 26: Noppen
- 27: Loch
- 28: Stift
- 29: Langloch
- 30: Befestigungsloch
- 31: Befestigungsloch
- 32: Hülsenansatz
- 33: Kugellager
- 34: Schraube
- 35: Deckel
- 36: Zylinderfläche
- 37: Zylinderfläche
- 38: Dichtungshülse
- 39: Axialspannhülse
- 40: Scheibe
- 41: Schraube
- 42: Lasche
- 43: Dämpfungselement
- 44: Bohrung
- 45: Sicherungsstift
- 46: Tasche

- 51: Aggregat
- 52: Gehäuseöffnung
- 53: Flanschfläche
- 54: Ansenkung
- 55: Flanschfläche

## Patentansprüche

1. Riemenspannvorrichtung zur Befestigung an einem Aggregat, mit einer Torsionsfederanordnung, einem Gehäuse (12) mit einer Längsachse (A), einer Torsionsfeder (14), die koaxial zur Längsachse (A) im Gehäuse (12) liegt und mit einem ihrer Enden drehfest in dem Gehäuse (12) festgelegt ist, einem Spannarm (15), der gegenüber dem Gehäuse (12) um die Längsachse (A) schwingend drehbar gelagert ist und mit dem anderen Ende der Torsionsfeder (14) drehfest verbunden ist, und einer Spannrolle (16), die an einem freien Ende des Spannarms (15) um eine zur Längsachse (A) parallele Drehachse (B) drehbar gelagert ist,
**dadurch gekennzeichnet,**
**daß** am Gehäuse (12) ein Flansch (13) zur Befestigung am Aggregat (51) angeordnet ist, dessen Flanschebene von der Längsachse (A) durchsetzt wird.

2. Vorrichtung nach Anspruch 1,
**dadurch gekennzeichnet,**
**daß** die Flanschebene normal zur Längsachse (A) liegt.

3. Vorrichtung nach einem der Ansprüche 1 oder 2,
**dadurch gekennzeichnet,**
**daß** der Flansch (13) als Ringflansch ausgebildet ist und insbesondere am Gehäuse (12) angeschweißt ist.

4. Vorrichtung nach einem der Ansprüche 1 bis 3,
**dadurch gekennzeichnet,**
**daß** das Gehäuse (12) als Rohrkörper ausgebildet ist.

5. Vorrichtung nach einem der Ansprüche 1 bis 4,
**dadurch gekennzeichnet,**
**daß** der Flansch (13) axial benachbart zu einem Lagerauge (17) des Spannarms (15) angeordnet ist.

6. Vorrichtung nach einem der Ansprüche 1 bis 5,
**dadurch gekennzeichnet,**
**daß** am Flansch ein Anschlagbolzen (28) parallel zur Längsachse (A) angesetzt ist, der mit einer kreisbogenförmigen Langlochausnehmung (29) im Spannarm (15) als Drehanschlag zusammenwirkt.

7. Vorrichtung nach einem der Ansprüche 1 bis 6,
**dadurch gekennzeichnet,**
**daß** der Flansch (13) ein oder mehrere Durchgangslöcher (31) zur Anschraubung am Aggregat (51) aufweist.

8. Vorrichtung nach einem der Ansprüche 1 bis 6,
**dadurch gekennzeichnet,**
**daß** axial entgegengesetzt zum Flansch (13) am Gehäuse (12) eine axiale Spannbuchse (39) zur Verspannung Flansches (13) am Aggregat (51) angeordnet ist.

9. Vorrichtung nach einem der Ansprüche 1 bis 7,
**dadurch gekennzeichnet,**
**daß** auf dem Gehäuse (12) eine Reibungsdämpfungsvorrichtung (21, 25) angeordnet ist, die sich im Drehsinn im Lagerauge (17) des Spannarms (15) abstützt (Figur 2, Figur 5).

10. Vorrichtung nach einem der Ansprüche 1 bis 7,
**dadurch gekennzeichnet,**
**daß** auf dem Lagerauge (17) des Spannarms (15) eine Reibungsdämpfungsvorrichtung (21', 25') angeordnet ist, die sich im Drehsinn am Aggregat (51) abstützt (Figur 9).

11. Aggregat (51) mit einer daran befestigten Riemenspannvorrichtung mit einer Torsionsfederanordnung, einem Gehäuse (12) mit einer Längsachse (A), einer Torsionsfeder (14), die koaxial zur Längsachse (A) im Gehäuse (12) liegt und mit einem ihrer Enden drehfest in dem Gehäuse (12) festgelegt ist, einem Spannarm (15), der gegenüber dem Gehäuse (12) um die Längsachse (A) schwingend drehbar gelagert ist und mit dem anderen Ende der Torsionsfeder (14) drehfest verbunden ist, und einer Spannrolle (16), die an einem freien Ende des Spannarms (15) um eine zur Längsachse (A) parallele Drehachse (B) drehbar gelagert ist,
**dadurch gekennzeichnet,**
**daß** das Aggregat (51) eine Gehäuseausnehmung (52) mit umgebender Flanschfläche (53) aufweist, in die das Gehäuse (12) der Riemenspannvorrichtung eingesetzt ist, wobei der Gehäuseflansch (12) an der Flanschfläche (53) des Aggregats (51) befestigt ist (Figur 1, figur 3).

12. Aggregat nach Anspruch 11,
**dadurch gekennzeichnet,**
**daß** der Gehäuseflansch (13) an der Flanschfläche (53) des Aggregats (51) angeschraubt ist.

13. Aggregat (51) mit einer daran befestigten Riemenspannvorrichtung mit einer Torsionsfederanordnung, einem Gehäuse (12) mit einer Längsachse (A), einer Torsionsfeder (14), die koaxial zur Längsachse (A) im Gehäuse (12) liegt und mit einem ihrer Enden drehfest in dem Gehäuse (12) festgelegt ist, einem Spannarm (15), der gegenüber dem Gehäuse um die Längsachse (A) schwingend drehbar gelagert ist und mit dem anderen Ende der Torsionsfeder (14) drehfest verbunden ist, und einer Spannrolle (16), die an einem freien Ende des Spannarms (15) um eine zur Längsachse (A) parallele Drehachse (B) drehbar gelagert ist,
**dadurch gekennzeichnet,**
**daß** das Aggregat (51) eine Gehäuseausnehmung (52) mit umgebender Flanschfläche (53) aufweist, in die das Gehäuse (12) der Riemenspannvorrichtung eingesetzt ist, wobei sich der Gehäuseflansch (13) an der Flanschfläche (53) des Aggregats (51) abstützt und das Gehäuse (12) mit Spannmitteln (39, 40, 41) gegen das Aggregat (51) axial verspannt ist (Figur 7).

14. Aggregat nach Anspruch 13,
**dadurch gekennzeichnet,**
**daß** die Spannmittel (39, 40, 41) eine auf das Ende des Gehäuses (12) aufgesetzte axiale Spannhülse (39) umfassen, die sich entgegen der Abstützung des Gehäuseflansches (13) am Aggregat (51) axial abstützt.
